Europäisches Patentamt

European Patent Office

Office européen des brevets

(11) Numéro de publication: **0 267 067 B1**

# (12) FASCICULE DE BREVET EUROPEEN

(45) Date de publication de fascicule du brevet:
**03.04.91**

(51) Int. Cl.5: **F16L 21/02, F16L 47/06, B29C 65/68**

(21) Numéro de dépôt: **87402161.1**

(22) Date de dépôt: **29.09.87**

Le dossier contient des informations techniques présentées postérieurement au dépôt de la demande et ne figurant pas dans le présent fascicule.

(54) **Procédé et dispositif de raccord rapide d'un tube ou tuyau sur un embout rigide.**

(30) Priorité: **24.10.86 FR 8614776**

(43) Date de publication de la demande:
**11.05.88 Bulletin 88/19**

(45) Mention de la délivrance du brevet:
**03.04.91 Bulletin 91/14**

(84) Etats contractants désignés:
**BE DE ES GB IT NL SE**

(56) Documents cités:
**DE-A- 2 635 363**
**FR-A- 1 577 715**
**FR-A- 2 195 222**

(73) Titulaire: **HUTCHINSON**
**2 rue Balzac**
**F-75008 Paris(FR)**

(72) Inventeur: **Argy, Gilles**
**15ter, rue Nationale**
**F-78940 La Queue Les Yvelines(FR)**

(74) Mandataire: **Orès, Bernard et al**
**Cabinet ORES 6, Avenue de Messine**
**F-75008 Paris(FR)**

## Description

L'invention a pour objet un procédé et un dispositif de raccord rapide d'un tube ou tuyau, sur un embout rigide.

Elle vise, notamment, un procédé et un dispositif de raccord rapide d'un tube ou tuyau sur un embout propres à être utilisés dans le domaine de l'industrie automobile, par exemple pour le montage d'une durite sur le radiateur et/ou le moteur d'un véhicule ou encore la fixation de tubulures de pompe à eau, ou analogues.

On utilise actuellement, pour la fixation sur des embouts, de tubes ou tuyaux souples formant certaines canalisations des véhicules automobiles, des colliers de serrage à bande ou fil métallique qui, quelle que soit la réalisation proposée, sont mis en place manuellement et ainsi parfois de manière incorrecte, de sorte que, lors des opérations de contrôle en fin de chaîne de montage, il apparaît dans certains cas des défauts d'étanchéité à la liaison des tubes ou tuyaux avec leurs embouts respectifs, ce qui rend nécessaire des "reprises", c'est-à-dire des opérations à la fois longues et coûteuses.

Pour tenter de pallier ces difficultés d'une part et, pour essayer de rendre aussi automatique que possible le montage des tubes ou tuyaux sur leurs embouts respectifs, d'autre part, on a déjà proposé des dispositifs d'assemblage généralement constitués par un corps en matière plastique rendu solidaire du tube ou tuyau et qui est propre à coopérer avec un organe conjugué fixé sur l'embout. De tels dispositifs connus, s'ils donnent satisfaction en ce qui concerne l'étanchéité au fluide circulant dans le tube ou tuyau, présentent cependant de nombreux inconvénients. Ils sont de structure mécanique relativement complexe et ont un encombrement plus important que celui des colliers qu'ils sont destinés à remplacer ce qui les rend parfois impropres à leur utilisation sur des ensembles où l'espace fait défaut ; ils exigent, en outre, la présence de joints, généralement toriques qui, non seulement en grèvent le coût, mais encore peuvent être la cause d'un manque de fiabilité à long terme en raison de leur destruction progressive, concomitante à celle de la matière plastique utilisée, notamment sous l'action de la chaleur.

On connaît également par DE-A1-26 35 363 un dispositif de raccord pour tubes comprenant entre les deux tubes à relier entre eux un élément susceptible d'augmenter de volume sous l'effet de la chaleur dégagée par l'effet Joule d'un courant électrique circulant dans une résistance.

Le besoin existe donc d'un dispositif de raccord rapide et sûr d'un tube ou tuyau sur un embout qui puisse être mis en oeuvre dans le domaine de l'industrie automobile, c'est-à-dire, notamment, par un processus d'automatisation aussi complet que possible et c'est, précisément, un but de l'invention de fournir un tel dispositif et son procédé de montage.

C'est, aussi, un but de l'invention de fournir un dispositif qui, assemblé par un ou des robots d'une chaîne de montage de véhicules automobiles, assure une excellente étanchéité au fluide aqueux circulant dans le tube ou tuyau, tout en ayant une durée de vie importante.

C'est, à cet égard, un but de l'invention de fournir un procédé et un dispositif qui assurent une fixation suffisamment résistante du tube ou tuyau sur l'embout pour que n'apparaissent pas des désolidarisations intempestives de l'un par rapport à l'autre soit sous l'action de la pression du fluide, soit pour d'autres raisons.

C'est, enfin, un but de l'invention de fournir un tel dispositif dont l'encombrement ne soit pas trop important et, en tout cas, peu différent de celui des dispositifs à colliers connus.

Pour résoudre le problème posé, la Demanderesse a pensé faire application des propriétés de certains matériaux du type élastomère qui présentent la particularité de fortement augmenter le volume, jusqu'à 900% dans cetains cas, lorsqu'ils sont mis en présence d'eau ou d'humidité et, selon l'invention, on propose un dispositif de raccord rapide d'un tube ou tuyau sur un embout rigide caractérisé en ce qu'il comprend entre le tube ou tuyau et l'embout une garniture en un tel matériau élastomère dont le volume augmente fortement ou très fortement, par exemple de l'ordre de 9 fois le volume initial, lorsqu'il est mis au contact d'eau ou d'humidité constitué par un mélange de résine(s) non soluble(s) dans l'eau mais expansive(s) et de caoutchouc(s) synthétique(s), ladite garniture étant conformée et dimensionnée de façon telle qu'elle peut être aisément rapportée sur l'embout dans sa condition non opératoire alors qu'en condition opératoire elle présente une partie comprimée entre ledit embout et ledit tube ou tuyau auquel est associée une douille externe rigide formant butée radiale, ladite partie comprimée assurant simultanément le maintien du tube ou tuyau sur l'embout et l'étanchéité du dispositif de raccord.

Selon une autre caractéristique de l'invention, la douille externe rigide associée au tube ou tuyau comporte un culot dont ladite garniture est rendue solidaire à l'aide de moyens d'adhérisation.

En variante, la solidarisation est obtenue par surmoulage, sur la douille, du matériau élastomère constitutif de la garniture.

Dans une forme de réalisation, le corps de la douille est cannelé, une telle dispositif facilitant la mise en place du dispositif sur le tube ou tuyau qu'il est destiné à équiper, en particulier lorsque celui-ci est lui-même réalisé à base de caoutchouc.

Selon une autre caractéristique de l'invention, les parties de la garniture qui, dans la condition opératoire, ne sont pas au contact de l'eau, du tube ou de l'embout, sont avantageusement revêtues d'un vernis ou film de protection destiné à s'opposer à la désorption d'eau, susceptible de provoquer un retour de la garniture à sa forme et à ses dimensions initiales, de la condition non opératoire.

Dans une variante de réalisation, la protection à l'encontre d'une désorption d'eau est obtenue lors de la fabrication par moulage de la garniture en prévoyant sur les parties exposées de celle-ci un matériau différent de celui utilisé pour la partie amenée à subir une modification importante de volume.

Selon une autre caractéristique de l'invention, la garniture est conformée à partir de sa zone de solidarisation au culot de la douille suivant un manchon et, pour favoriser le maintien du dispositif sur l'embout rigide préalablement à sa mise en condition opératoire, ledit manchon présente, sur une partie au moins de sa face interne, des dents ou aspérités de retenue dudit manchon sur l'embout rigide.

"Les matériaux propres à être mis en oeuvre pour la réalisation de la garniture sont généralement constitués par des mélanges de résine(s) non soluble(s) dans l'eau mais expansive(s) qui peuvent être du type de celles vendues par les Sociétés KURARAY ISOPREN CHEMICAL Co. ou SUMITOMO KAGAHU KOGYO Co. sous les dénominations KI-GEL 201 et SUMIKAGEL SP 520, respectivement, et de caoutchouc(s) synthétique(s), comme des néoprènes".

Dans une réalisation du dispositif, des fibres creuses ou poreuses sont ajoutées au matériau élastomère, préalablement à sa mise en forme, de sorte que lors de la mise en contact d'eau ou d'humidité avec ledit matériau la diffusion de cette eau dans le matériau est accrue et, ainsi, favorisé le passage de l'état initial à l'état opératoire.

Dans une autre réalisation, la rapidité souhaitée de passage d'une phase à l'autre est obtenue en augmentant la surface de contact du matériau et de l'eau, avantageusement en ménageant dans la masse d'élastomère des canaux borgnes débouchant sur la face d'extrémité du manchon distante de celle adjacente au culot de la douille.

Pour améliorer la tenue du dispositif à l'usage, et en particulier s'opposer à son déplacement relatif par rapport au tube ou tuyau qu'il équipe, l'invention prévoit, dans un premier mode d'exécution, de rendre le dispositif solidaire du tube ou tuyau par collage, avantageusement dans la zone de coopération de la douille et dudit tube ou tuyau.

Dans une autre forme de réalisation, on prévoit de ménager, sur la surface interne du tube ou tuyau, une ou des gorges, de préférence hélicoïdale(s), avec laquelle ou lesquelles coopère(nt) une ou des nervure(s) de forme conjuguée façonnée(s) sur la garniture en matériau élastomère.

Dans encore une autre forme de réalisation la douille, alors réalisée dans un tube métallique mince, est munie d'aspérités ou d'indentations obtenues par découpage, estampage ou analogue et qui s'opposent au déplacement relatif du tube ou tuyau par rapport au dispositif.

L'invention vise également un procédé pour le raccord rapide d'un tube ou tuyau sur un embout rigide, caractérisé en ce que l'on rapporte sur le tube ou tuyau un dispositif tel que défini ci-dessus, en ce que l'on positionne le tube ou tuyau ainsi équipé sur l'embout rigide auquel le tube ou tuyau doit être raccordé et en ce que l'on amène de l'eau ou un milieu aqueux au contact de la garniture en matériau élastomère du dispositif.

Dans un mode d'exécution avantageux, la dernière phase du procédé est conduite en deux étapes, d'abord pour l'obtention d'un pré-gonflement de la garniture en matériau élastomère suffisant pour assurer le maintien du dispositif sur l'embout auquel il est associé, suivie d'un gonflement complémentaire assurant l'étanchéité et la solidarisation du tube ou tuyau et dudit embout.

Dans un tel mode opératoire, le milieu aqueux est avantageusement celui d'un gel à base d'eau rapporté sur ledit matériau élastomère préalablement à l'opération de montage et maintenu dans celui-ci par capillarité.

En variante, on associe au matériau élastomère une réserve d'eau, par exemple sous forme d'un matériau spongieux à cellules ouvertes, lequel peut être réalisé sous forme d'un anneau disposé sur la face interne de la partie en manchon du dispositif.

L'invention sera bien comprise par la description qui suit, faite à titre d'exemple et en référence au dessin annexé dans lequel :

- la figure 1 est une demi-vue, schématique, en coupe longitudinale, d'un dispositif selon l'invention dans une première condition ;

- la figure 2 est une vue analogue mais dans la condition d'assemblage du dispositif ;

- la figure 3 est une vue partielle schématique, en coupe transversale, illustrant un détail de structure du dispositif selon l'invention ;

- la figure 4 est une demi-vue partielle, en coupe longitudinale, destinée à illustrer une partie de la structure d'un dispositif selon l'invention, pour une autre forme de réalisation ;

- la figure 5 est une vue analogue à la figure 4 mais pour une variante de réalisation ;

- la figure 6 est une vue en coupe selon la ligne 6-6 de la figure 5 ;

- la figure 7 est une demi-vue schématique, en coupe longitudinale, illustrant des moyens de liaison entre eux des parties constitutives du dispositif selon l'invention ;

- la figure 8 est une vue analogue à celle de la figure 7 mais pour une variante ;

- la figure 9 est une demi-vue, en coupe longitudinale, d'un dispositif selon l'invention.

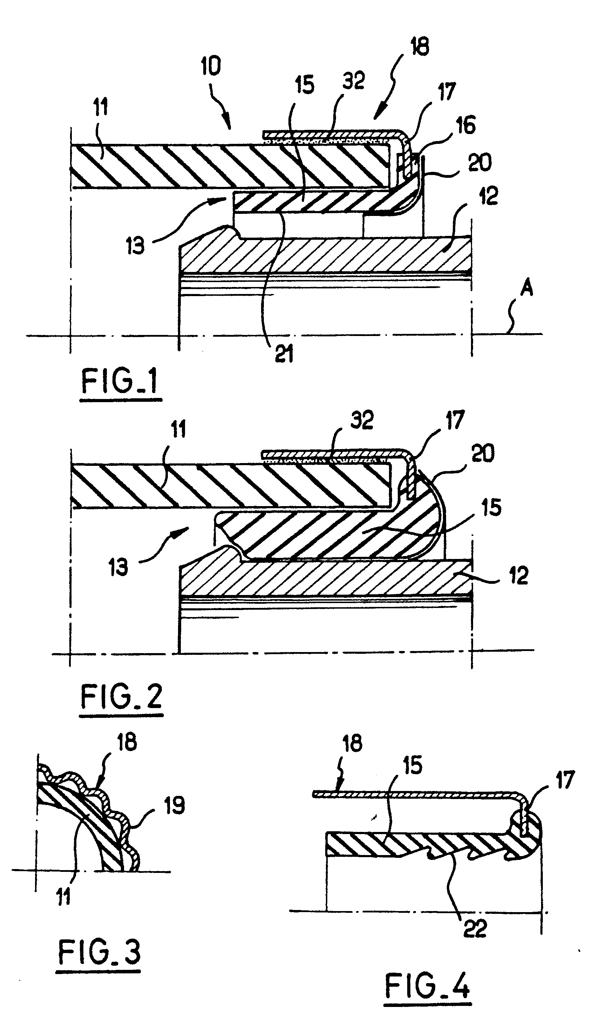

On se réfère d'abord aux figures 1 et 2 qui illustrent, schématiquement, une réalisation d'un dispositif 10 de raccord rapide d'un tube ou tuyau 11 sur un embout rigide 12, par exemple de boîte à eau de radiateur d'automobile lorsque le tuyau 11 est une durite de ce même radiateur.

Conformément à l'invention, on prévoit de faire application, pour le dispositif 10 de raccord rapide, d'un matériau élastomère qui, mis au contact de l'eau, ou en présence d'humidité, augmente considérablement de volume et conserve cette propriété aussi longtemps qu'il ne se produit pas de désorption d'eau. De tels matériaux sont généralement obtenus à partir de mélanges de résines non solubles dans l'eau mais expansives et de caoutchoucs synthétiques, comme des néoprènes ; certains sont connus, par exemple, sous la dénomination commerciale VYNON HYDROTITE et sont vendus par la Société C. ITOH-KASEI CO. LTD.

Dans la réalisation décrite et représentée, le matériau élastomère est conformé suivant un manchon 13 comportant une partie cylindrique 15 et un retour 16, dirigé sensiblement perpendiculairement à la partie cylindrique et vers l'extérieur de celle-ci pour la solidarisation du manchon au culot 17 d'une douille 18 obtenue le plus simplement par matriçage ou estampage d'un tube métallique d'un diamètre correspondant au diamètre externe du tube ou tuyau 11. Ce tube métallique peut être à section droite circulaire ou, en variante et comme montré sur la figure 3, présenter des ondulations 19 destinées à faciliter la mise en place du dispositif par emmanchement sur le tube ou tuyau 11 de la douille garnie du manchon 13 lequel est ainsi conformé et dimensionné de façon telle qu'il s'applique sur la face interne du tube ou tuyau 11 quand la douille est au contact de la face externe dudit tube ou tuyau.

Conformément à l'invention, également, la surface du manchon 13 dans la zone de sa partie 15 adjacente au retour 16 et la plus proche de l'axe de révolution A du dispositif ainsi que sur la face externe dudit retour est revêtue d'une couche 20 de vernis ou d'un film d'un produit analogue destiné à s'opposer à une désorption d'eau, comme il sera explicité ci-après.

Dans la condition initiale du dispositif, qui est celle montrée sur la figure 1, la douille 18 est emmanchée à l'extrémité du tube ou tuyau 11 avec le manchon 13 qui en est solidaire. Le diamètre de la surface interne 21 de la partie 15 est choisi pour que le tube ou tuyau 11 muni du dispositif 10 puisse être aisément amené à coiffer ledit embout par un simple mouvement de translation relative du tuyau et de l'embout après que ceux-ci aient été rendus sensiblement co-axiaux mais également de manière que l'embout 12 ne puisse échapper au tube ou tuyau 11 muni de son dispositif préalablement au gonflement du manchon 13, l'invention prévoyant, pour ce faire, d'une part, de conformer et dimensionner la partie 15 de manière qu'il existe un certain frottement entre celle-ci et l'embout dans la condition initiale et, d'autre part, d'accroître ce frottement en ménageant sur la face interne 21 de ladite partie 15, au moulage, des aspérités 22, figure 4, quelque peu en forme d'"arêtes de poisson" disposées de manière telle qu'elles s'opposent à une extraction intempestive de l'embout par rapport au dispositif.

Le déplacement du tube muni du dispositif sur l'embout qui peut être obtenu à l'aide d'un robot ou d'un manipulateur analogue est ensuite suivi par un apport d'eau ou d'humidité sur le manchon 13 pour provoquer la forte ou très forte augmentation de volume dudit manchon qui amène le dispositif dans la condition montrée sur la figure 2 en laquelle le gonflement du matériau constitutif du manchon 13 applique ce dernier à force à la fois contre la surface externe de l'embout 12 et la surface interne du tube ou tuyau 11 lequel est maintenu par la douille 18, avec pour résultat une fixation sûre et étanche du tube ou tuyau sur l'embout.

Pour réaliser un gonflement du matériau constitutif du manchon 13 aussi rapide que possible, lors de la mise en eau, l'invention prévoit d'améliorer la diffusion de l'eau dans le matériau élastomère gonflant à l'humidité (EGH) en introduisant dans le mélange constitutif dudit matériau ultérieurement moulé des fibres creuses ou poreuses.

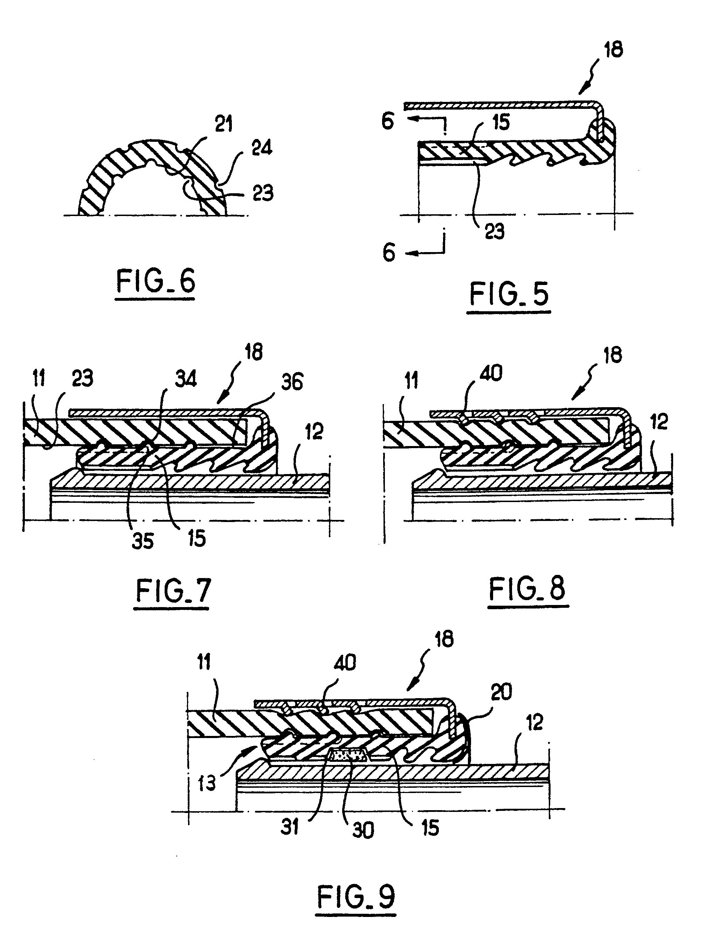

En variante, l'invention prévoit d'augmenter la surface de contact dudit matériau et de l'eau en ménageant dans la partie 15 du manchon 13 des canaux borgnes comme 23, sur la surface interne dudit manchon, ou comme 24 sur la surface externe de celui-ci, figures 5 et 6.

Dans un autre mode de mise en oeuvre du procédé de l'invention, on associe au matériau élastomère constitutif du dispositif 13, préalablement à son montage sur l'embout, un gel à base d'eau introduit, par exemple, dans les canaux comme 23 ou 24 du manchon 13, ou dans des canaux auxiliaires dont la forme est alors choisie pour qu'ils maintiennent, par capillarité, le gel à base d'eau dont ils sont remplis lors de l'opération de montage du tube ou tuyau sur l'embout.

En variante, l'invention fait appel à un matériau spongieux à cellules ouvertes, avantageusement sous forme d'un anneau 30, logé dans un évidement 31 de la face interne 21 de la partie 15, figure 9, et propre à constituer une réserve d'eau suffisante pour provoquer un pré-gonflement dudit matériau élastomère préalablement au remplissage complet et/ou à la mise en pression de l'ensemble mécanique, comme un moteur ou un radiateur de véhicule automobile qu'équipe le dispositif.

Pour que soit conservée, au cours du temps, l'étanchéité au fluide circulant dans le tube ou tuyau 11 d'une part, et, d'autre part, une fixation suffisamment résistante du tube ou tuyau sur l'embout 12 il convient tout d'abord de s'opposer au retour du dispositif à sa condition initiale, par désorption d'eau, et ceci est obtenu à l'aide du vernis ou film de protection 20 qui, dans la condition montrée sur la figure 2, garnit sensiblement la totalité de la surface du dispositif 13 qui n'est pas en contact avec l'eau circulant dans le tube ou l'embout. Il convient également que soit conservé, au cours du temps, le contact établi entre le matériau constitutif du dispositif 13 et le tube ou tuyau 11. Pour ce faire, une première réalisation prévoit de solidariser la douille 18 et la face externe du tube ou tuyau 11 par collage, comme montré schématiquement en 32 sur les figures 1 et 2.

Dans une autre réalisation, figure 7, on munit la face interne 33 du tube ou tuyau 11 d'une ou de plusieurs gorge(s) 34 hélicoïdale(s), usinée(s) dans le tube ou obtenue(s) directement de moulage et dans laquelle (lesquelles) se loge(nt) alors une ou des nervure(s) 35 de forme conjuguée de la surface externe 36 de la partie 15 du manchon 13.

Dans encore une autre réalisation, figure 8, le déplacement relatif en translation du tube ou tuyau 11 et du dispositif 10 est interdit en ménageant dans la douille 18 des aspérités comme des griffes 40 obtenues par découpage, ou emboutissage, et dont l'orientation est telle qu'elles s'opposent à un glissement du dispositif 10 par rapport au tube ou tuyau 11.

On a représenté, sur la figure 9, un dispositif selon l'invention incorporant l'ensemtle des moyens évoqués ci-dessus pour son maintien par rapport au tube ou tuyau 11 d'une part et, d'autre part,des moyens propres à assurer le gonflement du manchon 13, en deux étapes, à savoir d'abord un premier gonflement obtenu à l'aide d'un gel à base d'eau et/ou de l'anneau 30 en matériau spongieux puis, une seconde augmentation de volume lors du remplissage en eau de l'ensemble mécanique qu'équipe le dispositif.

Pour celui-ci, de bons résultats ont été obtenus pour la solidarisation d'un tube ou tuyau 11 d'un diamètre interne de 20 mm, sur un embout rigide d'un diamètre externe de 19 mm. Les caractéristiques du dispositif 13 étaient les suivantes :

matériau constitutif : mélange caoutchouc vendu sous le nom de VYNON HYDROTITE par la Société ITOH KASEI Co Ltd et qui, lorsqu'il est mis au contact d'eau ou d'humidité augmente de volume dans une proportion de 900 %, conformé suivant un manchon d'une épaisseur de 1,5 mm à l'état non gonflé et d'une épaisseur de 3 mm à l'état gonflé, fixé par surmoulage sur le culot d'une douille en acier d'une épaisseur de 0,8 mm.

Dans une telle réalisation, le film ou pellicule 20 est réalisé par un vernis à base de polyuréthanne étanche à l'eau et l'anneau 30 était réalisé en un matériau du type spongieux.

## Revendications

1. Dispositif de raccord rapide d'un tube ou tuyau sur un embout comportant un élément susceptible d'augmenter de volume entre l'embout et le tube ou tuyau, caractérisé en ce que ledit élément est une garniture (13) en un matériau élastomère propre à fortement ou très fortement augmenter de volume, par exemple de l'ordre de 9 fois le volume initial lorsqu'il est mis au contact d'eau ou d'humidité, constitué par un mélange de résine(s) non soluble(s) dans l'eau mais expansive(s) et de caoutchouc(s) synthétiques, ladite garniture étant conformée et dimensionnée de façon telle qu'elle peut être aisément rapportée sur l'embout (12) dans sa condition non opératoire alors qu'en condition opératoire elle présente une partie comprimée entre ledit embout et le tube ou tuyau (11) auquel est associée une douille externe rigide (18) formant butée radiale, ladite partie comprimée assurant simultanément le maintien du tube ou tuyau sur l'embout et l'étanchéité du dispositif de raccord.

2. Dispositif selon la revendication 1, caractérisé en ce que la douille rigide (18) comporte un culot (17) dont ladite garniture est rendue solidaire à l'aide de moyens d'adhérisation (32...).

3. Dispositif selon la revendication 1, caractérisé en ce que la douille (18) est solidarisée avec ladite garniture (13) par surmoulage, sur la douille, du matériel élatomère constitutif de la garniture.

4. Dispositif selon la revendication 2, caractérisé en ce que le corps de la douille (18) est cannelé.

5. Dispositif selon l'une quelconue des revendications précédentes, caractérisé en ce que les parties de la garniture (13) qui, dans la condition opératoire, ne sont pas au contact de l'eau, du tube ou de l'embout, sont avantageusement revêtues d'un vernis ou film de protection (20) destiné à s'opposer à la désorption d'eau.

6. Dispositif selon l'une quelconque des revendications 1 à 4, caractérisé en ce que la garniture (13) est réalisée par moulage en prévoyant sur les parties exposées de celle-ci un matériau différent de celui utilisé pour la partie amenée à subir une modification importante de volume.

7. Dispositif selon l'une quelconque des revendications précédentes, caractérisé en ce que la garniture (13) est conformée à partir de sa zone de solidarisation au culot (17) de la douille (18) suivant un manchon (15) et, pour favoriser son maintien sur l'embout rigide (12) préalablement à sa mise en condition opératoire, ledit manchon présente, sur une partie au moins de sa face interne (21) des dents ou aspérités (22) de retenue dudit manchon sur l'embout rigide (12).

8. Dispositif selon l'une quelconque des revendications précédentes, caractérisé en ce qu'il comprend, sur la surface interne (23) du tube ou tuyau (11), une ou des gorges (34), de préférence hélicoïdale(s), avec laquelle ou lesquelles coopère(nt) une ou des nervure(s) (35) de forme conjuguée façonnée(s) sur la garniture (13) en matériau élastomère gonflant à l'humidité (EGH).

9. Dispositif selon la revendication 2, caractérisé en ce que la douille (18) réalisée dans un tube métallique mince est munie d'aspérités ou d'indentations (40) obtenues par découpage, estampage ou analogue et qui s'opposent au déplacement relatif du tube ou tuyau (11) par rapport à la garniture (13).

10. Dispositif selon l'une quelconque des revendications précédentes, caractérisé en ce que le matériau élastomère gonflant à l'humidité (EGH) est du type de ceux constitués par des mélanges de résine(s) non soluble(s) dans l'eau mais expansives et de caoutchouc(s) synthétique(s) comme des néoprènes.

11. Dispositif selon la revendication 10, caractérisé en ce que des fibres creuses ou poreuses sont ajoutées au matériau élastomère, préalablement à sa mise en forme, de sorte que lors de la mise au contact d'eau ou d'humidité avec ledit matériau la diffusion de cette eau dans le matériau est accrue et, ainsi, favorisé le passage de l'état initial à l'état opératoire.

12. Dispositif selon l'une quelconque des revendications précédentes, caractérisé en ce que la partie (15) de la garniture (13) de forme cylindrique comprend des canaux borgnes (23, 24) débouchant sur la face d'extrémité de ladite partie distante de celle adjacente au culot (17) de la douille (18).

13. Dispositif selon la revendication 12, caractérisé en ce que certains des canaux (23, 24) sont garnis d'un gel à base d'eau qui y est rapporté préalablement à l'opération de montage et y est maintenu par capillarité.

14. Dispositif selon l'une quelconque des revendications précédentes, caractérisé en ce qu'il comprend un anneau (30) en un matériau spongieux à cellules ouvertes lequel est disposé sur la face interne (31) de la partie cylindrique (15) du manchon (13).

15. Procédé pour le raccord rapide d'un tube ou tuyau sur un embout rigide, caractérisé en ce que l'on rapporte sur le tube ou tuyau (11) un dispositif (10) selon l'une quelconque des revendications 1 à 14 cidessus, en ce que l'on positionne le tube ou tuyau ainsi équipé sur l'embout rigide (12) auquel le tube ou tuyau doit être raccordé et en ce que l'on amène de l'eau ou un milieu aqueux au contact de la garniture en matériau élastomère du dispositif.

16. Procédé selon la revendication 15, caractérisé en ce que sa dernière phase est conduite en deux étapes, d'abord pour l'obtention d'un prégonflement de la garniture en matériau élastomère suffisant pour assurer le maintien du dispositif sur l'embout auquel il est associé suivie d'un gonflement complémentaire assurant l'étanchéité et la solidarisation du tube ou tuyau et dudit embout.

**Claims**

1. Device for the rapid connection of a tube or pipe to a nipple comprising an element capable of increasing its volume between the nipple and the tube or pipe, characterized in that the element is a packing (13) made from an elastomer material adapted to greatly or very greatly increase in volume, for example of the order of nine times the initial volume, when it is placed in contact with water or humidity, formed by a mixture of resin(s) which are not soluble but expansive in water and synthetic rubber(s), said packing being formed and dimensioned so that it may be readily fixed to the nipple (12) in its non operative state, whereas in its operative state it has a portion compressed between said nipple and the tube or pipe (11) with which there is associated an external rigid socket (18) forming a radial stop, said compressed portion simultaneously ensuring holding of the tube or pipe on the nipple and the fluid tightness of the coupling device.

2. Device according to claim 1, characterized in that the rigid socket (18) comprises a head (17) with which said packing is rigidly connected by adhesion means (32...).

3. Device according to claim 1, characterized in that the socket (18) is rigidly connected to said packing (13) by moulding the elastomer material forming the packing on to the socket.

4. Device according to claim 2, characterized in that the body of the socket (18) is grooved.

5. Device according to any one of the preceding claims, characterized in that the portions of the packing (13) which, in the operative state, are not in contact with the water, the tube or the nipple, are advantageously coated with a protective varnish or film (20) adapted to oppose the desorption of water.

6. Device according to any one of claims 1 to 4, characterized in that the packing is formed by moulding while providing on the exposed portions thereof a material different from that used for the portion caused to undergo an important modification in volume.

7. Device according to any one of the preceding claims, characterized in that the packing (13) is shaped, from the zone where it is fixed to the head (17) of the socket (18) onwards in the form of a sleeve (15) and, to promote its retention on the rigid nipple (12) prior to being placed in the operative state, said sleeve has, over a portion at least of its internal face (21), teeth or roughnesses (22) retaining said sleeve on the rigid nipple (12).

8. Device according to any one of the preceding claims, characterized in that it comprises, on the internal surface (23) of the tube or pipe (11) one or more grooves (34), preferably helical, with which there cooperate(s) one or more ribs (35) of matching shape formed on the packing (13) of an elastomer material which swells in humidity (EGH).

9. Device according to claim 2, characterized in that the socket (18), formed from a thin metal tube, is provided with roughnesses or indentations (40) obtained by punching, stamping or the like and which oppose the relative displacement of the tube or pipe (11) with respect to the packing (13).

10. Device according to any one of the preceding claims, characterized in that the elastomer material which swells in humidity (EGH) is of the type formed by mixtures of resin(s) which are non soluble but expansive in water and synthetic rubber(s) such as neoprenes.

11. Device according to claim 10, characterized in that hollow or porous fibres are added to the elastomer material, prior to its shaping, in such a manner that when water or humidity is brought into contact with said material, the diffusion of this water in the material is increased and thus promotes the transition from the initial state to the operative state.

12. Device according to any one of the preceding claims, characterized in that the cylindrically shaped portion (15) of the packing (13) comprises blind channels (23, 24) opening on to the end face of said portion remote from that adjacent the head (17) of the socket (18).

13. Device according to claim 12, characterized in that some of the channels (23, 24) are lined with a water-based gel which is applied to them prior to the assembly operation and is there held by capillarity.

14. Device according to any one of the preceding claims, characterized in that it comprises a ring (30) made from a spongy material with open cells which is disposed on the internal face (31) of the cylindrical portion (15) of the sleeve (13).

15. Method for the rapid connection of a tube or pipe to a rigid nipple, characterized in that a device (10) according to any one of the above claims 1 to 14 is added to the tube or pipe (11), in that the tube or pipe thus equipped is positioned on the rigid nipple (12) to which the tube or pipe is to be connected and in that water or an aqueous medium is brought into contact with the elastomer material packing of the device.

16. Method according to claim 15, characterized in that its last phase is carried out in two steps, first of all for obtaining pre-swelling of the elastomer material packing sufficient to hold the device in position on the nipple with which it is associated, followed by complementary swelling ensuring fluid tightness and rigid connection between the tube or pipe and said nipple.

## Ansprüche

1. Vorrichtung zum schnellen Anschluß eines Rohrs oder Schlauchs an einem Ansatzstück, die ein zur Volumenvergrößerung fähiges Element zwischen dem Ansatzstück und dem Rohr oder Schlauch hat, dadurch **gekennzeichnet,** daß das Element ein Aufsatz (13) aus einem elastomeren Material ist, das zur starken oder sehr starken Volumenvergrößerung, zum Beispiel in der Größenordnung von 9 mal des Ausgangsvolumens, geeignet ist, wenn er in Kontakt mit Wasser oder Feuchtigkeit gebracht wird, welches von einer Mischung von Harz(en), das bzw. die nicht in Wasser lösbar, jedoch sich ausdehnend ist bzw. sind, und synthetischem Kautschuk oder synthetischen Kautschuken gebildet ist, wobei der Aufsatz so geformt und bemessen ist, daß er leicht auf das Ansatzstück (12) im Nichtbetriebszustand aufgesetzt werden kann, während er im Betriebszustand einen komprimierten Bereich zwischen dem Ansatzstück und dem Rohr oder Schlauch (11) aufweist, mit dem eine starre äußere Hülse (18) verbunden ist, die einen radialen Anschlag bildet, wobei der komprimierte Bereich gleichzeitig die Selbsthaltung des Rohrs oder Schlauchs auf dem Ansatzstück und die Dichtigkeit der Anschlußvorrichtung sicherstellt.

2. Vorrichtung nach Anspruch 1, dadurch **gekennzeichnet,** daß die starre Hülse (18) einen Boden (17) hat, mit dem der Aufsatz mit Hilfe von Haftmitteln (32...) fest verbunden ist.

3. Vorrichtung nach Anspruch 1, dadurch **gekennzeichnet,** daß die Hülse (18) mit dem Aufsatz (13) durch Überformen des elastomeren Materials, aus dem der Aufsatz besteht, über die Hülse fest verbunden ist.

4. Vorrichtung nach Anspruch 2, dadurch **gekennzeichnet,** daß der Körper der Hülse (18) gerieft ist.

5. Vorrichtung nach irgendeinem der vorhergehenden Ansprüche, dadurch **gekennzeichnet,** daß die Bereiche des Aufsatzes (13), die im Betriebszustand nicht mit dem Wasser, dem Rohr oder dem Ansatzstück in Kontakt sind, vorteilhafterweise mit einem Schutzanstrich oder -film (20) überzogen sind, der dazu bestimmt ist, der Wasserdesorption entgegenzuwirken.

6. Vorrichtung nach irgendeinem der Ansprüche 1 bis 4, dadurch **gekennzeichnet,** daß der Aufsatz (13) durch Formen hergestellt ist, indem auf seinen exponierten Teilen ein anderes Material vorgesehen wird, als es für den Teil verwendet wird, der eine starke Volumenänderung erfährt.

7. Vorrichtung nach irgendeinem der vorhergehenden Ansprüche, dadurch **gekennzeichnet,** daß der Aufsatz (13) ausgehend von seiner Zone der festen Verbindung mit dem Boden (17) der Hülse (18) gemäß einer Manschette (15) gestaltet ist und daß diese Manschette, um ihre Selbsthaltung auf dem starren Ansatzstück (12), bevor sie in den Betriebszustand gebracht wird, zu begünstigen, auf zumindest einem Teil ihrer Innenseite (21) Zähne oder Unebenheiten (22) zum Zurückhalten der Manschette auf dem starren Ansatzstück (12) aufweist.

8. Vorrichtung nach irgeneinem der vorhergehenden Ansprüche, dadurch **gekennzeichnet,** daß sie auf der Innenseite (23) des Rohrs oder Schlauchs (11) eine oder mehrere, vorzugsweise schraubenförmige, Vertiefung(en) (34) aufweist, womit eine oder mehrere Rippe(n) (35) von konjugiert gestalteter Form zusammenwirkt bzw. -wirken, die auf dem Aufsatz (13) aus einem in der Feuchtigkeit anschwellenden elastomeren Material (EAF) ausgebildet ist bzw. sind.

9. Vorrichtung nach Anspruch 2, dadurch **gekennzeichnet,** daß die Hülse (18), die aus einem dünnen Metallrohr hergestellt ist, mit Unebenheiten oder Ausbuchtungen (40) versehen ist, die durch Stanzen, Prägen oder auf ähnliche Weise erhalten werden und eine Relativverschiebung des Rohrs oder Schlauchs (11) mit Bezug auf den Aufsatz (13) entgegenwirken.

10. Vorrichtung nach irgendeinem der vorhergehenden Ansprüche, dadurch **gekennzeichnet,** daß das in der Feuchtigkeit anschwellende elastomere Material (EAF) von der Art ist, wie es diejenigen sind, die durch Mischungen von Harz(en), das bzw. die nicht im Wasser lösbar, jedoch sich ausdehnend ist bzw. sind, und synthetischem Kautschuk oder synthetischen Kautschuken, wie Neoprenen, gebildet sind.

11. Vorrichtung nach Anspruch 10, dadurch **gekennzeichnet,** daß hohle oder poröse Fasern dem elastomeren Material vor seiner Formgebung von der Art zugesetzt werden, daß, während das Material in Kontakt mit Wasser oder Feuchtigkeit gebracht wird, die Diffusion dieses Wassers in dem Material erhöht und somit der Übergang vom Ausgangszustand in den Betriebszustand begünstigt wird.

12. Vorrichtung nach irgendeinem der vorhergehenden Ansprüche, dadurch **gekennzeichnet,** daß der Teil (15) des Aufsatzes (13), der zylindrische Form hat, Blindkanäle (23, 24) umfaßt, die auf der Seite des Endes dieses Teils münden, das von demjenigen entfernt ist, welches benachbart dem Boden (17) der Hülse (18) ist.

13. Vorrichtung nach Anspruch 12, dadurch **gekennzeichnet,** daß einige der Kanäle (23, 24) mit einem Gel auf Wasserbasis versehen sind, das hier vor dem Vorgang der Montage aufgetragen worden ist und hier durch Kapillarität festgehalten wird.

14. Vorrichtung nach irgendeinem der vorhergehenden Ansprüche, dadurch **gekennzeichnet,** daß sie einen Ring (30) aus einem offenzelligen schwammigen Material umfaßt, der auf der Innenseite (31) des zylindrischen Teils (15) der Manschette (13) angeordnet ist.

15. Verfahren zum schnellen Anschluß eines Rohrs oder Schlauchs an einem starren Ansatzstück, dadurch **gekennzeichnet,** daß man auf das Rohr oder den Schlauch (11) eine Vorrichtung (10) gemäß irgendeinem der Ansprüche 1 bis 14 aufsteckt, daß man das so bestückte Rohr oder den so bestückten Schlauch auf dem starren Ansatzstück (12), mit dem das Rohr oder der Schlauch verbunden werden soll, positioniert, und daß man Wasser oder ein wäßriges Medium in Kontakt mit dem Aufsatz aus elastomerem Material der Vorrichtung bringt.

16. Verfahren nach Anspruch 15, dadurch **gekennzeichnet,** daß seine letzte Phase in zwei Stufen durchgeführt wird, zunächst, damit ein Voranschwellen des Aufsatzes aus elastomerem Material erzielt wird, das ausreicht, um die Selbsthaltung der Vorrichtung auf dem Ansatzstück, mit dem sie verbunden wird, sicherzustellen, gefolgt von einem ergänzenden Anschwellen, das die Dichtheit und die feste Verbindung des Rohrs oder Schlauchs mit dem Ansatzstück sicherstellt.

FIG.1

FIG.2

FIG.3

FIG.4

FIG_6

FIG_5

FIG_7

FIG_8

FIG_9